(19) Europäisches Patentamt

European Patent Office

Office européen des brevets

(11) Publication number: **0 466 344 B1**

(12) **EUROPEAN PATENT SPECIFICATION**

(45) Date of publication of patent specification: **13.12.95**

(51) Int. Cl.⁶: **C03C 8/18**, C03C 8/16, C03C 8/14, C03C 17/00

(21) Application number: **91305619.8**

(22) Date of filing: **21.06.91**

(54) **A ceramic paint composition**

(30) Priority: **12.07.90 US 551332**

(43) Date of publication of application:
**15.01.92 Bulletin 92/03**

(45) Publication of the grant of the patent:
**13.12.95 Bulletin 95/50**

(84) Designated Contracting States:
**DE FR GB**

(56) References cited:
**EP-A- 0 092 431**
**EP-A- 0 362 136**
**GB-A- 2 096 593**
**US-A- 2 848 339**

(73) Proprietor: **FORD MOTOR COMPANY LIMITED**
**Eagle Way**
**Brentwood**
**Essex (GB)**

(84) Designated Contracting States:
**GB**

(73) Proprietor: **FORD WERKE A.G.**
**Werk Köln Niehl,**
**Henry Ford Strasse,**
**Postfach 60 40 02**

**D-50735 Köln (DE)**

(84) Designated Contracting States:
**DE**

(73) Proprietor: **FORD FRANCE S. A.**
**B.P. 307**
**F-92506 Rueil-Malmaison Cédex (FR)**

(84) Designated Contracting States:
**FR**

(72) Inventor: **Boaz, Premakaran T.**
**16842 Yorkshire**
**Livona,**
**Michigan 48154 (US)**

(74) Representative: **Messulam, Alec Moses et al**
**A. Messulam & Co.**
**24 Broadway**
**Leigh on Sea**
**Essex SS9 1BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a hot melt ceramic paint composition and a process for improving the uniformity of the ceramic hot melt paint as applied to the surface of a glass article.

Hot melt ceramic paint compositions are generally known to those ordinarily skilled in the art of applying ceramic paint fields to automotive and architectural glazings. Such ceramic paint compositions are used, for example, to form borders around the peripheral marginal surfaces of glazings used as windshields, sidelites, and backlites of motor vehicles.

Hot melt ceramic paints or pastes generally contain a mixture of metal oxides which together act as a colouring agent. The metal oxides are non-reactive with one another, as well as non-reactive with other compounds contained in the ceramic paint or the glass to which the ceramic paint is applied, at temperatures up to about 722 K (1,300°F). The mixture of metal oxides may be adjusted so as to achieve a specific colour for the ultimately produced ceramic paint field. For example, the peripheral marginal ceramic paint bands applied to automotive glazings are typically black.

Additionally, the hot melt ceramic paints or pastes generally known in the art contain one or more low melting ceramic frits, which melt at temperatures below about 722 K (1,300°F.) These low melting ceramic frits are the materials which ultimately fuse the hot melt ceramic paint compositions to the glass sheet, to insure that the ceramic paint band remains affixed to the glass sheet after being cooled to room temperature.

An application promoting vehicle is also generally mixed with the metal oxides and glass frits, to allow the hot melt ceramic paint composition to be applied at an elevated temperature to the surface of a glass sheet by a conventional paint application process. Generally a thermoplastic-type organic material containing viscosity modifiers is used, which allows the ceramic paint to be applied by brushing, spreading, or screen printing at an elevated temperature.

A major difficulty in applying the hot melt ceramic paints generally known in the art to glass surfaces by conventional paint application methods is the non-uniformity of the resultant paint layer. Such resulting non-uniformity causes a non-uniform colour or chroma of the ultimately produced painted field due to variations in the thickness of the paint at various points across the surface of the glass sheet. The inability to apply ceramic paint having a uniform thickness to the surface of a glass sheet is generally caused by volumetric temperature variations in the hot melt ceramic paint as it is applied to the substrate.

As an example, screen printing results in thickness variations, because the hot melt ceramic paint cannot be easily maintained at a uniform temperature across the face of the screen. In order to achieve the most uniform temperature possible, it is known to resistance heat the screen material or position infrared heating sources above the screen to heat the hot melt ceramic paint spread thereupon. Despite these efforts at maintaining a uniform temperature for the hot melt ceramic paint, there often still exist localised variations in temperature within the bulk of the hot melt ceramic paint. This is believed to be due to the uneven heating and subsequent uneven cooling of the paint as it is worked across the surface of the screen in a screen printing operation. The effect is compounded when an unheated squeegee is drawn across the screen, as either more or less paint is forced through the screen pattern depending upon the temperature and fluidity of the paint at that location.

It would be desirable to prepare a hot melt ceramic paint composition having a greater specific heat and thermal conductivity, to more easily maintain and conduct heat energy, and thereby provide a more uniform hot melt ceramic paint bulk temperature. Such a hot melt ceramic paint would produce a more uniform paint layer on the surface of a glass sheet when applied by conventional paint application methods, e.g., screen printing.

Accordant with the present invention, a hot melt ceramic paint composition which retains heat and is highly thermally conductive, thereby providing a substantially uniform bulk temperature throughout the paint which allows the application of a uniform layer of ceramic paint upon a glass surface utilizing conventional paint application methods, has surprisingly been discovered, comprising:

A. ceramic frit
B. pigment;
C. hot melt material; and
D. metal powder.

Moreover, there has surprisingly been discovered a method for preparing a glass sheet having a fired ceramic paint field thereon, e.g., an automotive glazing having a paint band on a peripheral marginal surface thereof, comprising the steps of:

A. providing a glass sheet, including a surface;

B. applying to at least a portion of the surface a heat-retaining, thermally conductive ceramic paint composition, comprising:

    i. ceramic frit;

    ii. pigment;

    iii. hot melt material; and iv. metal powder; and

C. heating the glass sheet and ceramic paint thereon to a temperature which is maintained for a period of time, sufficient to cause the ceramic paint to devitrify and simultaneously fuse to the glass sheet,

    the metal powder being effective to retain heat and conduct thermal energy in the ceramic paint to improve the uniformity of the fused ceramic paint layer.

The ceramic paint compositions and method for preparing a glass sheet having a fired ceramic paint field thereon of the present invention are particularly suited for preparing automotive and architectural glazings.

The heat-retaining, thermally conductive hot melt ceramic paint compositions comprise ceramic frit, pigment, hot melt material, and metal powder.

Suitable ceramic frits include one or more glass frits prepared from conventional lead borosilicate glass compositions that are high in lead content. Alternatively, the frit may comprise a combination of metal oxides such as those selected from the group consisting of oxides of zinc, lead, titanium, zirconium, sodium, boron, lithium, potassium, calcium, aluminium, tin, vanadium, molybdenum, magnesium, iron, manganese, and the like. The frit is prepared by melting the frit batch ingredients at temperatures from about 916 K (1650°F) to about 1611 K (2,900°F), and then quenching the molten frit composition either with the use of water or by pouring the melt between cooled metal rolls rotating in opposite direction. The resulting chunks of frit are then ground into fine particles so as to pass through a 325 U.S. Standard Sieve mesh screen. A lead borosilicate glass frit high in lead content is preferred because it is readily available and relatively inexpensive. The frit is generally added to the ceramic paint composition at a concentration from about 20% to about 60% by weight. Preferably, the concentration of ceramic frit in the ceramic paint composition is from about 30% to about 50% by weight.

Pigments for use in compositions embodying the present invention generally comprise mixture of metal oxides which together act as a colouring agent for the hot melt ceramic paint. These metal oxides include, but are not limited to, oxides of chromium, cobalt, nickel, manganese, iron, or copper. Mixtures of these metal oxides form various colours, as is well known in the art of glass making. A particularly useful mixture of metal oxides for applying a concealment ceramic paint band to a peripheral marginal surface of an automotive glazing is conventionally known in the art as black oxide powder. The metal oxide pigments are non-reactive with one another, as well as non-reactive with other compounds contained in the ceramic paint or the glass to which the ceramic paint is applied, up to temperatures of about 722 K (1,300°F). The concentration of pigment in the ceramic paint composition generally may be from about 5% to about 30% by weight. Preferably, the concentration is from about 10% to about 20% by weight, and most preferably, the concentration is about 16% by weight of the hot melt ceramic paint composition.

The hot melt materials suitable for use in the hot melt ceramic paint compositions may be any of the hot melt materials generally known in the art. Such hot melt materials typically comprise a plastic, a hydrocarbon resin, and a wax. The plastic generally provides the mechanical and adhesive properties of the hot melt material. The hydrocarbon resin functions as a tackifier and also assists wetting of the ceramic paint components and the glass substrate. The wax is present to reduce the viscosity, since a high viscosity would otherwise require higher use temperatures in order to cause the hot melt material to flow and would additionally result in thermal degradation of the hot melt material component of the ceramic paint composition. Additionally, the wax acts as an extender and a wetting agent. These three components may be combined in virtually any amounts, depending upon the hot melt performance characteristics desired. The three hot melt components act together to provide the hot melt material with a high softening temperature and a low melt viscosity. Ceramic paint compositions containing hot melt materials are particularly susceptible to forming non-uniform paint layers on glass sheets, because the change in viscosity is dramatic near the paint application temperature which greatly affects the flowability of the ceramic paint. The hot melt material is generally added to the ceramic paint composition at a concentration from about 10% to about 25% by weight.

The plastics which are useful for formulating the hot melt materials include, but are not limited to, ethylene/vinyl acetate copolymers, polyesters, polycarbonates, polyamides, acrylics such as polymethylmethacrylate, polyethers, polystyrenes, vinyl chloride polymers, polyurethanes, and the like, as well as blends and copolymers thereof. Preferred plastics are copolymers of ethylene and vinyl acetate.

Suitable hydrocarbon resins for preparing the hot melt materials are generally low molecular weight polymers including, but not limited to, low molecular weight olefins, e.g., polyethylene and polypropylene, cowmaroneindene or coal-tar resins, $C_5$ to $C_9$ aliphatic olefindiolefin resins such as those obtained by the steam cracking of petroleum naphthas, aromatic resins, e.g., methyl styrenes, cyclic diolefin resins, e.g., dicyclopentadiene, and polyterpenes obtained by polymerizing various unsaturated terpene hydrocarbons, e.g., wood rosins, tall oil, and balsam resins.

Waxes which are useful for preparing the hot melt materials according to the present invention include, but are not limited to, paraffin, microcrystalline and semicrystalline waxes such as, for example, Fischer-Tropsch waxes comprising long chain linear parafins having molecular weights less than 1,500, and synthetic polyolefin waxes obtained from the cracking of petroleum naphthas to produce low molecular weight homopolymers of ethylene having waxlike properties.

The hot melt materials may optionally contain additional conventional polymer adjuvants such as, for example, solvents, fillers, tackifiers, hydrophobicity promoters, thermal stabilizers, and the like.

Suitable metal powders which are added to the hot melt ceramic paint compositions include, but are not limited to, zinc, silver, aluminium, tin, copper, iron, lead, titanium, zirconium, and the like, as well as mixtures and alloys thereof. A preferred metal powder is finely divided zinc powder. The metal powder is added to the ceramic paint composition in a concentration from about 5% to about 50% by weight. Preferably, the concentration is from about 20% to about 40%. Most preferably, the concentration of the metal powder is from about 25% to about 35% by weight of the hot melt ceramic paint composition. The powdered metal effectively increases both the specific heat and thermal conductivity of the paint. This allows the paint to more easily retain the heat which has been applied to make the ceramic paint flowable, and assists in normalising the bulk temperature throughout the volume of the paint. Consequently, a more uniform layer of hot melt ceramic paint may be applied to the surface of a glass sheet by conventional paint application methods, e.g., screen printing.

The hot melt ceramic paint compositions may be prepared by mixing the ceramic frit, pigment, hot melt material, and metal powder in any conventional batch compounding apparatus, such as, for example, a roller mill, at an appropriate elevated temperature, so as to form a flowable hot melt ceramic paint composition.

A glass sheet having a fired ceramic paint field thereon may be prepared by applying to at least a portion of a surface of the glass sheet the heat-retaining, thermally conductive hot melt ceramic paint compositions of the present invention, and thereafter heating the glass sheet and paint thereon to a temperature and for a time, sufficient to cause the hot melt ceramic paint to devitrify and simultaneously adhere to the glass sheet. The glass sheet may be prepared from any type of glass generally known in the art of glass making. Typical glass sheets include soda-lime-silica automotive and architectural glazings, generally produced by the well-known float glass process. However, a fired ceramic paint field may be formed on any glass sheet by the process of the present invention.

In operation, the hot melt ceramic paint composition is applied as a uniform layer to the surface of the glass sheet in a predetermined pattern by a conventional paint application method, e.g., screen printing wherein the hot melt ceramic paint is spread across the screen by a squeegee to force the paint through the pattern onto the glass sheet where the ceramic paint solidifies and adheres thereto. The predetermined pattern may comprise, for example, a concealment band positioned on a peripheral marginal surface of an automotive glazing. Such concealment bands are well known in the art of automotive glazings as useful for preventing the degradation of adhesives used to mount the glazing in a vehicle opening as a result of exposure to solar radiation, and for concealing attachment hardware and structural components which lie below the edges of the glazing. The band generally extends to the edges of the glazing, and has a width sufficient to conceal the underlying adhesive and structural components, but which is sufficiently narrow to provide maximum vision to occupants of the vehicle. It is known to apply such a band to the surface of an automotive glazing by silk screening the band of ceramic paint onto the glazing and thereafter firing the ceramic paint. Such a method is more fully set forth in U.S. Patent No. 4,770,685 to Boaz, which is incorporated herein in its entirety by references thereto. Clearly, other predetermined patterns may be prepared by applying various ceramic paint fields to glass surfaces, depending upon the ultimate purpose for the fired ceramic paint field.

The metal powder contained in the hot melt ceramic paint increases both the specific heat and thermal conductivity of the paint, which improves the uniformity of the paint layer adhered to the glass surface as well as the uniformity of the fired ceramic paint field after the glass sheet has been heated to devitrify and fuse the paint. By the term "uniformity" as it is used herein is meant that the layer of ceramic paint is uniform or homogeneous in all respects, including thickness, consistency, density, appearance, colour visual texture, etc. This is particularly necessary in ceramic paints which contain hot melt materials, wherein temperature variations of only a few degrees throughout the volume of the paint would result in wide variations in the paint's viscosity and therefore flowability.

After a uniform layer of hot melt ceramic paint has been adhered in a predetermined pattern or field to the surface of a glass sheet, the glass sheet is heated to a temperature and for a time, sufficient to cause the ceramic paint to devitrify and simultaneously fuse to the glass sheet. The temperature is generally from about 500 K (900°F) to about 611 K (1,100°F). The time required for devitrification and fusion is generally from about 1 to about 5 minutes. Preferably, the time is from about 2 to about 3 minutes. During this process step, the ceramic paint is heated to a temperature so as to devitrify the ceramic frit, converting it to a crystalline or semicrystalline phase characterised by a glassy matrix. Simultaneously, the ceramic frit fuses to the glass sheet. The temperature required for devitrifying and fusing the ceramic paint is lower than the softening point of the glass sheet, yet is high enough to allow for bakeout or volitization of the organic components of the ceramic paint which are present as a result of the addition of the hot melt material to the ceramic paint composition. Generally, the heating process is accomplished by passing the glass sheet through a tempering or press bending lehr.

Conveniently, when utilizing the hot melt ceramic paint compositions of the present invention, the usually required additional process step of drying the ceramic paint between the time when it is applied to the glass sheet in a predetermined pattern and when the ceramic paint is fired, is not necessary. The hot melt component of the ceramic paint composition causes the uniform paint layer to solidify rapidly on the surface of the glass sheet to give a sharp image precisely conforming to the applied predetermined pattern, which image is resistant to smudging upon subsequent handling of the glass sheet. Conversely, where a liquid organic vehicle is used to suspend a ceramic frit and pigment, as is commonly employed in known ceramic paints, the applied paint field must be dried to drive off volatile components of the organic vehicle before the glass sheet can be handled without smearing the applied ceramic paint field. However, the advantageous use of the hot melt component of the present invention can result in a uniformly applied and adhered ceramic paint field only where a metal powder is simultaneously added to the ceramic paint, to provide increased heat retention and thermal conductivity to the hot melt ceramic paint composition.

The invention is more easily comprehended by reference to specific embodiments which are representative of the invention. It must be understood, however, that the specific embodiments are provided only for the purposes of illustration and understanding, and that the invention may be practiced otherwise than as specifically described without departing from its spirit and scope.

EXAMPLES 1 - 3

Hot melt ceramic paint compositions are prepared by admixing and heating the ingredients recited in Table 1. These paints are applied to glass sheets, by a conventional screen printing process, in a predetermined pattern so as to form a concealment band on the peripheral marginal surface of each sheet. Thereafter, the glass sheets are conveyed through an automotive glazings press bending lehr where the organic constituents of the hot melt material are driven from the paint and simultaneously the paint is devitrified and fused to the glass sheet.

It is observed that the paint appears uniform over the entire predetermined pattern as initially applied to the glass sheets, and that the fired ceramic paint field resulting from the conveyance of the glass sheets through the lehr appears uniform in colour, density, and visual texture.

TABLE 1

Hot Melt Ceramic Paint Results

| | Frit[1] % by wt. | Pigment[2] % by wt. | Hot Melt[3] % by wt. | Metal[4] % by wt. | Appearance, As Applied | Appearance, As Fired |
|---|---|---|---|---|---|---|
| Example 1 | 50 | 13 | 13 | 24 | Uniform | Uniform |
| Example 2 | 36 | 27 | 21 | 16 | Uniform | Uniform |
| Example 3 | 35 | 35 | 18 | 12 | Uniform | Uniform |
| Comparison 1 | 66 | 17 | 17 | -0- | Non-Uniform | Non-Uniform |

1. Lead-borosilicate glass frit.
2. Equal mixture of oxides of Co, Fe, Cr, Ni, and Cu
3. Ferro H-52 (TM), manufactured by Ferro Corporation, Cleveland, Ohio.
4. Zinc metal powder.

**Claims**

1. A heat-retaining, thermally conductive ceramic paint composition, comprising:
   A. ceramic frit;
   B. pigment;
   C. hot melt material comprising a plastic, a hydrocarbon resin and a wax; and
   D. metal powder.

**2.** A heat-retaining, thermally conductive ceramic paint composition according to Claim 1, wherein the metal powder is selected from the group consisting of zinc, silver, aluminium, tin, copper, iron, lead, titanium, zirconium, and mixtures and alloys thereof.

**3.** A heat-retaining, thermally conductive ceramic paint composition according to Claim 1 or 2, wherein the metal powder comprises from about 5% to about 50% by weight of the ceramic paint composition.

**4.** A heat-retaining, thermally conductive ceramic paint composition according to Claim 3, wherein the metal powder comprises from 20% to 40% by weight of the ceramic paint composition.

**5.** A heat-retaining, thermally conductive ceramic paint composition, comprising:
A. from about 20% to about 60% by weight of lead borosilicate glass frit high in lead content;
B. from about 5% to about 30% by weight of pigment;
C. from about 10% to about 25% by weight of hot melt material including plastic, hydrocarbon resin, and wax; and
D. from about 5% to about 50% by weight of metal powder selected from the group consisting of zinc, silver, aluminium, tin, copper, iron, lead, titanium, zirconinum, and mixtures and alloys thereof,
the total weight percentages of ingredients A, B, C, and D not exceeding 100%.

**6.** A heat-retaining, thermally conductive ceramic paint composition, comprising:
A. from about 30% to about 50% by weight of lead borosilicate glass frit high in lead content;
B. from about 10% to about 20% by weight of pigment;
C. from about 10% to about 25% by weight of hot melt material including a plastic, a hydrocarbon resin, and a wax; and
D. from about 20% to about 40% by weight of metal powder including zinc,
the total weight percentages of ingredients A, B, C, and D not exceeding 100%.

**7.** A process for preparing a glass sheet having a fired ceramic paint field thereon, comprising the steps of:
A. providing a glass sheet, including a surface;
B. applying to at least a portion of the surface a heat-retaining, thermally conductive ceramic paint composition, as claimed in any one of the preceding claims, and
C. heating the glass sheet with ceramic paint thereon to a temperature which is maintained for a period of time, sufficient to cause the ceramic paint to devitrify and simultaneously fuse to the glass sheet,
the metal powder being effective to retain heat and conduct thermal energy in the ceramic paint to improve the uniformity of the fused ceramic paint layer.

**8.** A process for preparing a glass sheet having a fired ceramic paint field thereon according to Claim 7, wherein the ceramic paint composition is applied by a screen printing process.

**9.** A process according to claim 7 or 8, in which the glass sheet with ceramic paint thereon is heated to a temperature from 500 K to 611 K (900°F to 1,100°F) which is maintained for a period of time from 1 to 5 minutes.

**10.** A process according to claim 9, wherein the glass sheet with ceramic paint thereon is heated from 2 to 3 minutes.

**Patentansprüche**

**1.** Ein wärmespeichernder, wärmeleitender Keramikanstrich, umfassend:
A. Eine keramische Fritte;
B. ein Pigment;
C. ein heißschmelzendes Material, umfassend eine Plastikmasse, ein Harz auf Kohlenwasserstoffbasis und ein Wachs; und
D. ein Metallpulver.

**2.** Ein wärmespeichernder, wärmeleitender Keramikanstrich nach Anspruch 1, worin das Metallpulver aus der Reihe ausgewählt ist, die aus Zink, Silber, Aluminium, Zinn, Kupfer, Eisen, Blei, Titan, Zirkon und Mischungen und Legierungen davon besteht.

**3.** Ein wärmespeichernder, wärmeleitender Keramikanstrich nach Anspruch 1 oder 2, worin das Metallpulver zirka 5 bis zirka 50 Gewichtsprozent des Keramikanstriches darstellt.

**4.** Ein wärmespeichernder, wärmeleitender Keramikanstrich nach Anspruch 3, worin das Metallpulver zwischen 20 und 40 Gewichtsprozent des Keramikanstriches darstellt.

**5.** Ein wärmespeichernder, wärmeleitender Keramikanstrich, umfassend:
A. Zirka 20 bis zirka 60 Gewichtsprozent einer Fritte aus Borosilikatglas mit hohem Bleianteil;
B. zirka 5 bis zirka 30 Gewichtsprozent Pigment;
C. zirka 10 bis zirka 25 Gewichtsprozent eines heißschmelzenden Materials, umfassend eine Plastikmasse, ein Harz auf Kohlenwasserstoffbasis und ein Wachs; und
D. zirka 5 bis zirka 50 Gewichtsprozent eines Metallpulvers, das aus der Reihe ausgewählt ist, die aus Zink, Silber, Aluminium, Zinn, Kupfer, Eisen, Blei, Titan, Zirkon und Mischungen und Legierungen davon besteht,
wobei die gesamten Gewichtsprozente der Bestandteile A, B, C und D 100% nicht übersteigen.

**6.** Ein wärmespeichernder, wärmeleitender Keramikanstrich, umfassend:
A. Zirka 30 bis zirka 50 Gewichtsprozent einer Fritte aus Borosilikatglas mit hohem Bleianteil;
B. zirka 10 bis zirka 20 Gewichtsprozent Pigment;
C. zirka 10 bis zirka 25 Gewichtsprozent eines heißschmelzenden Materials, umfassend eine Plastikmasse, ein Harz auf Kohlenwasserstoffbasis und ein Wachs; und
D. zirka 20 bis zirka 40 Gewichtsprozent eines Metallpulvers, umfassend Zink, wobei die gesamten Gewichtsprozente der Bestandteile A, B, C und D 100% nicht übersteigen.

**7.** Ein Verfahren zum Herstellen einer Glastafel mit einem darauf aufgebrannten Bereich aus Keramikanstrich, umfassend die Schritte:
A. Des Bereitstellens einer Glastafel, umfassend eine Oberfläche;
B. des Auftragens auf mindestens einen Teil der Oberfläche eines wärmespeichernden, wärmeleitenden keramischen Anstriches nach irgendeinem der vorhergehenden Ansprüche, und
C. des Erhitzens der Glastafel mit dem Keramikanstrich darauf auf eine Temperatur, die über einen Zeitraum beibehalten wird, der ausreicht, um den Keramikanstrich zu entglasen und ihn gleichzeitig mit der Glastafel zu verschmelzen,
wobei das Metallpulver im Speichern von Wärme und im Leiten von thermischer Energie im Keramikanstrich wirksam ist, um die Gleichmäßigkeit der geschmolzenen Lage aus Keramikanstrich zu erhöhen.

**8.** Ein Verfahren zum Herstellen einer Glastafel mit einem darauf aufgebrannten Bereich aus Keramikanstrich nach Anspruch 7, worin der Keramikanstrich mittels eines Siebdruckverfahrens aufgetragen wird.

**9.** Ein Verfahren nach Anspruch 7 oder 8, worin die Glastafel mit dem Keramikanstrich darauf auf eine Temperatur zwischen 482°C und 593°C (900°F bis 1100°F) erhitzt wird, die über einen Zeitraum von 1 bis 5 Minuten beibehalten wird.

**10.** Ein Verfahren nach Anspruch 9, worin die Glastafel mit dem Keramikanstrich darauf 2 bis 3 Minuten lang erhitzt wird.

**Revendications**

**1.** Composition de peinture céramique thermiquement conductrice, conservant la chaleur et comprenant :
A. une fritte céramique
B. du pigment;
C. une matière thermofusible comprenant une matière plastique, une résine hydrocarbonée et une cire, et
D. de la poudre de métal.

**2.** Composition de peinture céramique thermiquement conductrice, conservant la chaleur, selon la revendication 1, dans laquelle la poudre de métal est choisie dans le groupe consistant en du zinc, de l'argent, de l'aluminium, de l'étain, du cuivre, du fer, du plomb, du titane, du zirconium et leurs mélanges et leurs alliages.

**3.** Composition de peinture céramique thermiquement conductrice, conservant la chaleur, selon la revendication 1 ou 2, dans laquelle la poudre de métal représente environ 5 % à environ 50 % du poids de la composition de peinture céramique.

**4.** Composition de peinture céramique thermiquement conductrice, conservant la chaleur, selon la revendication 3, dans laquelle la poudre de métal représente de 20 % à 40 % du poids de la composition de la peinture céramique.

**5.** Composition de peinture céramique thermiquement conductrice, retenant la chaleur et comprenant:
A. d'environ 20 % à environ 60 % en poids d'une fritte de verre au borosilicate de plomb, à forte teneur en plomb,
B. d'environ 5 % à environ 30 % en poids de pigment;
C. d'environ 10 % à environ 25 % en poids de matière thermofusible comprenant de la matière plastique, de la résine hydrocarbonée et de la cire; et
D. d'environ 5 % à environ 50 % en poids d'une poudre de métal choisie dans le groupe consistant en du zinc, de l'argent, de l'aluminium, de l'étain, du cuivre, du fer, du plomb, du titane, du zirconium et leurs mélanges et leurs alliages,
les pourcentages pondéraux totaux des ingrédients A, B, C et D n'excédant pas 100 %.

**6.** Composition de peinture céramique thermiquement conductrice, conservant la chaleur et comprenant :
A. environ 30 % à environ 50 % en poids d'une fritte de verre au borosilicate de plomb à forte teneur en plomb;
B. d'environ 10 % à environ 20 % en poids de pigment;
C. d'environ 10 % à environ 25 % en poids de matière thermofusible comprenant une matière plastique, une résine hydrocarbonée et une cire; et
D. d'environ 29 % à environ 40 % en poids d'une poudre de métal comprenant du zinc,
les pourcentages pondéraux totaux des ingrédients A, B, C, et D n'excédant pas 100 %.

**7.** Procédé pour préparer une feuille de verre comportant une zone ou un domaine portant de la peinture céramique cuite, procédé comprenant les étapes consistant à :
A. se procurer une feuille de verre comprenant une surface,
B. appliquer sur au moins une partie de la surface une composition de peinture céramique thermiquement conductrice, conservant la chaleur, telle que revendiquée dans l'une quelconque des revendications précédentes, et
C. chauffer la feuille de verre, portant la peinture céramique, jusqu'à une température qui est maintenue pendant une période de temps suffisante pour provoquer la dévitrification de la peinture céramique et simultanément sa fixation par fusion à la feuille de verre,
la poudre de métal pouvant efficacement retenir de la chaleur et conduire l'énergie thermique dans la peinture céramique pour améliorer l'uniformité de la couche de peinture céramique fondue et fusionnée.

**8.** Procédé pour préparer une feuille de verre portant un domaine comportant de la peinture céramique, selon la revendication 7, dans lequel la composition de peinture céramique est appliquée par un procédé d'impression par sérigraphie.

**9.** Procédé selon la revendication 7 ou 8, dans lequel la feuille de verre portant la peinture céramique est chauffée jusqu'à une température de 482 °C à 593 °C (900 °F à 1100 °F) que l'on maintient pendant la période de temps d'1 à 5 minutes.

**10.** Procédé selon la revendication 9, dans lequel la feuille de verre portant la peinture céramique est chauffée durant 2 à 3 minutes.